# EUROPEAN PATENT SPECIFICATION

(11) **EP 3 288 778 B1**
(45) Date of publication and mention of the grant of the patent: **26.03.2025**
(21) Application number: 16729055.0
(22) Date of filing: 29.04.2016
(51) Int. Cl.: B60C 1/00, C08K 9/06, C08L 21/00, C08K 3/04, C08K 3/36, C09C 1/30, C08K 5/00, C08K 9/02

(54) **VULCANISABLE ELASTOMERIC MATERIALS FOR COMPONENTS OF TYRES COMPRISING MODIFIED SILICATE FIBRES, AND TYRES THEREOF**
VULKANISIERBARE ELASTOMERE MATERIALIEN FÜR KOMPONENTEN VON REIFEN MIT MODIFIZIERTEN SILIKATFASERN UND REIFEN DARAUS
MATÉRIAUX ÉLASTOMÈRES VULCANISABLES POUR COMPOSANTS DE PNEUS COMPORTANT DES FIBRES DE SILICATE MODIFIÉ, ET PNEUS ASSOCIÉS

(30) Priority: 29.04.2015 IT MI20150611
(43) Date of publication of application: 07.03.2018
(73) Proprietor: Pirelli Tyre S.p.A., 20126 Milano (IT); Politecnico di Milano, 20133 Milano (IT)
(72) Inventor: GIANNINI, Luca, 20126 Milano (IT); GALIMBERTI, Maurizio, 20133 Milano (IT); CIPOLLETTI, Valeria, 20126 Milano (IT); PELI, Giulia, 20142 Milano (IT)
(74) Representative: PGA S.p.A.
(86) International application number: PCT/IB2016/052446
(87) International publication number: WO 2016/174628

(56) References cited:
- WO-A1-2012/164433
- P. PASBAKHSH ET AL.: "EPDM / modified halloysite nanocomposites", APPLIED CLAY SCIENCE, vol. 48, 1 February 2010 (2010-02-01), pages 405 - 413, XP002752239
- ZHANG QIAN ET AL: "Silane-grafted silica-covered kaolinite as filler of styrene butadiene rubber", APPLIED CLAY SCIENCE, vol. 65, 21 July 2012 (2012-07-21), pages 134 - 138, XP028936432, ISSN: 0169-1317, DOI: 10.1016/J.CLAY.2012.04.024

## Description

### FIELD OF THE INVENTION

The object of the present invention are new elastomeric materials for components of tyres, characterised by good static and dynamic mechanical properties, in particular by particularly low hysteresis. These elastomeric materials comprise modified silicate fibres of nanometric size obtainable according to the process described herein. Moreover, the present invention relates to components of tyres and to tyres for vehicle wheels comprising said elastomeric materials, such tyres being provided with lower rolling resistance.

### PRIOR ART

In the rubber industry, and more particularly in the tyre industry, it is known to add reinforcement fillers to the elastomeric compositions in order to improve the mechanical properties and the abrasion resistance of the elastomeric materials obtained therefrom by vulcanisation.

Due to its high reinforcing power, carbon black is the most commonly used filler. However, it imparts a strong hysteresis to the articles, i.e. it increases the dissipated heat under dynamic conditions. In tyres, this results in the undesired increase of the rolling resistance, and overall in higher fuel consumption, in the production of more polluting emissions and higher transport costs.

Currently, the majority of vehicle manufacturers increasingly require their suppliers to develop low rolling resistance tyres to reduce consumption.

In order to decrease the hysteresis of elastomeric materials, it is not decisive to use small amounts of carbon black and/or a carbon black with reduced surface area, as doing so compromises the reinforcement activity, thereby worsening the mechanical properties and the resistance abrasion of the final product.

An improvement in this sense was achieved by the use of the so-called "white" reinforcement fillers, such as chalk, talc, kaolin, bentonite, titanium dioxide and especially silica, fillers which may partially or totally replace the carbon black in elastomeric materials and impart a lower hysteresis to them while maintaining sufficient reinforcement.

However, a need remains to identify new fillers that allow a further improvement in the balance between hysteresis and reinforcement, to further reduce the rolling resistance of the tyres.

In fact, the hysteresis of the elastomeric material filled with silica still remains too high for certain specific applications, for example in tyres with ultra-low rolling resistance (ULRR) or in self-supporting tyres (run-flat) in which significantly lower heat dispersion and rolling resistance are instead required. The elastomeric materials filled with silica and/or silicates do not always show sufficient performance when incorporated in the components of the tyre subjected to strong stress, such as the tread, under-layer, anti-abrasive elongated element (or anti-abrasive band), sidewall, inner layers or sidewall insert (typical of a self-supporting tyre).

Moreover, a problem of fillers, in particular silica, is represented by the fact that under dynamic conditions, i.e. when the elastomeric material filled with silica and vulcanised is stressed in the tyre in use, a partial breakdown of the dispersed filler can occur that adversely affects the mechanical properties. This phenomenon occurs with a reduction of the dynamic module that is more marked when the deformation to which the elastomeric material is subjected is higher. In practical terms, just when the tyre is most stressed and then just when the elastomeric material should show the best mechanical performance, the reinforcing effect of the filler is however lacking. This phenomenon is known as Payne effect.

Fillers based on silicate fibres, while unexpectedly improving the drivability of cars subjected to high operating speeds and/or extreme driving conditions, seem to not overcome the drawbacks of silica of excessive rolling resistance and less support at higher deformations.

In this regard, document WO2012164433A1 on behalf of the applicant describes tyres which have improved performance during use in extreme conditions, in particular an improved driving stability, especially at the rear side of the vehicle. In these tyres, at least one layer of elastomeric material is applied in a radially inner position with respect to the tread band, comprising nanometric sized fibres consisting of magnesium and/or aluminium silicates, in particular sepiolite. Said fibres may be modified by treatment with quaternary ammonium salts or phosphonium salts. As can be seen from the data shown in table 2 of this document, the elastomeric material (sample 2) is considerably reinforced by the sepiolite fibres thus modified but at the same time it shows a strong decrease of the dynamic shear modulus with increasing dynamic deformation (high Payne effect) and a higher hysteresis compared with the material filled with silica (sample (1*).

Pasbakhsh P. et al., Applied Clay Science vol. 48, pages 405-413 (2010) discloses vulcanisable elastomeric compositions comprising halloysite nanotubes modified with a silane derivative, said silane derivative not being a precursor of amorphous silica.

Zhang Q et al., Applied Clay Science vol. 65-66, pages 134-138 (2012) discloses vulcanisable elastomeric compositions comprising kaolin particles silanised and coated with silica. These particles have flat and not needle-shaped morphology.

### SUMMARY OF THE INVENTION

The Applicant has set itself the problem of how to further reduce the hysteresis of the current elastomeric materials filled with silica to make tyres with minimal rolling resistance (ULRR tyres), usable in particularly demanding conditions, or of wider applicability, such as in summer tyres for cars, for all seasons or winter, as well as in light transport tyres or tyres for heavy load vehicles.

The Applicant has also set the objective of minimising the deterioration of mechanical properties at high deformations typical of elastomeric materials for tyres filled with silica and/or carbon black while maintaining the other important properties such as reduced rolling resistance, rigidity, abrasion resistance and, in driving the vehicle, handling and comfort.

The Applicant has found that silicate fibres with of nanometric size - suitably modified according to the process described herein below - impart unexpected properties to the elastomeric material in which they are incorporated, in place of or in addition to traditional fillers. These elastomeric materials are characterised not only by high static modulus values, but also by the maintenance of the dynamic modulus at high strains and by a decreased heat loss when subjected to stress, by reduction of both the Payne effect and of the hysteresis.

The dynamic properties of the elastomeric materials comprising the present modified fibres are better than those of elastomeric materials having the same composition filled with unmodified fibres (such as those described in WO2012164433A1) or with silica alone.

The lower hysteresis of the present elastomeric materials is predictive of a reduced rolling resistance in the tyre, less than that of tyres comprising elastomeric materials filled with silica, the other components being equal.

In addition, the excellent static mechanical properties of these elastomeric materials together with the significant reduction of the Payne effect result in a high reinforcing action in the tyre that persists even under extreme stress and in extreme driving condition.

Without wishing to be bound to any particular theory, the Applicant believes that the treatment process of the silicate fibres of the present invention, in its variants, may result in the deposition of amorphous silica on the surface of the fibres themselves, preserving the memory of their shape.

During the subsequent interactions with the other components of the elastomeric composition, such as silanes and elastomers, and in general in the vulcanisation of the elastomeric composition, the amorphous silica deposited on the surface of each fibre may interact with the other components more than the silicates of the fibres themselves . In this interaction the amorphous silica - more reactive than the silicates - would benefit from the special needle-shaped arrangement, resulting in fact in elastomeric materials with unexpected dynamic properties, in particular considerably reduced hysteresis and Payne effect.

These effects are not observed either in elastomeric materials comprising precipitated amorphous silica as such, silica assuming spherical and not needle shape, or elastomeric materials comprising the non-treated silicate fibres, where although there is the optimum needle-shaped arrangement, the reactivity of the amorphous silica is lacking.

Therefore, a first aspect of the present invention is a vulcanisable elastomeric composition for components of tyres comprising at least:
(a) 100 phr of at least one diene elastomeric polymer,
(b) from 1 to 80 phr of modified silicate fibres with needle-shaped morphology of nanometric size, wherein said fibres have an aspect ratio of at least 2:1 and a diameter or maximum cross-sectional dimension of less than 500 nm said modified fibres comprising amorphous silica deposited on the surface,
(c) from 0 to 120 phr of a standard reinforcement filler,
(d) from 0.1 to 15 phr of a vulcanising agent, and
(e) from 0.1 to 20 phr of a coupling agent,
wherein said modified fibres are obtained according to a process that comprises:
- providing silicate fibres with needle-shaped morphology of nanometric size having an aspect ratio of at least 2:1 and a diameter or maximum cross-sectional dimension of less than 500 nm,
- suspending said fibres in a first liquid medium,
- placing the suspension of the fibres in contact with a compound precursor of amorphous silica, possibly dissolved or suspended in a second liquid medium, wherein said compound precursor of amorphous silica is selected from:
   I. the alkaline salts of silicic acid, of formula

      M₂O. n SiO₂ (I)

      where M = Na, K, Li and where n is comprised between 0.5 and 4, preferably n =0.5 or 1 or 3 and M=Na or K;
   II. the tetra-alkyl derivatives of silicic acid (or tetra-alkoxy-silanes) of formula

      (RO)₄Si (II)

      wherein the R groups, equal to or different from each other, represent C1-C6 alkyls,
   III. the halosilanes of formula

      SiX₄ or (RO)₃SiX or (RO)₂SiX₂ or (RO)SiX₃ (III)

      wherein the R groups, equal to or different from each other, represent C1-C6 alkyls, and X, equal to or different from each other, are selected from among chlorine, bromine and iodine, preferably chlorine;
- possibly providing water,
- possibly providing an acid or a base,
- hydrolyzing the compound precursor of amorphous silica and allowing the modification of the fibres, and
- separating the fibres thus modified from the final liquid medium.

A further aspect of the present invention relates to a component of a tyre for vehicle wheels comprising a vulcanised elastomeric material, obtainable by vulcanisation of said vulcanisable elastomeric composition.

A further aspect of the present invention relates to a tyre for vehicle wheels comprising at least one tyre component comprising a vulcanised elastomeric material, obtainable by vulcanisation of said vulcanisable elastomeric composition. A further aspect of the present invention relates to a process for preparing modified silicate fibres that comprises:
- providing silicate fibres with needle-shaped morphology of nanometric size having an aspect ratio of at least 2:1 and a diameter or maximum cross-sectional dimension of less than 500 nm,
- suspending said fibres in a first liquid medium,
- placing the suspension of the fibres in contact with a compound precursor of amorphous silica, possibly dissolved or suspended in a second liquid medium, wherein said compound precursor of amorphous silica is selected from:
   I. the alkaline salts of silicic acid, of formula

      M₂O. n SiO₂ (I)

      where M = Na, K, Li and where n is comprised between 0.5 and 4, preferably n =0.5 or 1 or 3 and M=Na or K;
   II. the tetra-alkyl derivatives of silicic acid (or tetra-alkoxy-silanes) of formula

      (RO)₄Si (II)

      wherein the R groups, equal to or different from each other, represent C1-C6 alkyls,
   III. the halosilanes of formula

      SiX₄ or (RO)₃SiX or (RO)₂SiX₂ or (RO)SiX₃ (III)

      wherein the R groups, equal to or different from each other, represent C1-C6 alkyls, and X, equal to or different from each other, are selected from among chlorine, bromine and iodine, preferably chlorine;
- possibly providing water,
- possibly providing an acid or a base,
- hydrolyzing the compound precursor of amorphous silica and allowing the modification of the fibres, and
- separating the fibres thus modified from the final liquid medium.

For the purposes of the present description and of the following claims, the term "deposited" referred to amorphous silica means that said silica at least partially "covers" or "coats" the surface of the silicate fibres with needle-shaped morphology of nanometric size.

For the purposes of the present description and of the following claims, the term "phr" means the parts by weight of a given component of the vulcanisable elastomeric composition by 100 parts by weight of the diene elastomeric polymer. The vulcanisable elastomeric composition for components of tyres according to the present invention is characterised by one or more of the following preferred aspects taken alone or in combination with one another.

The vulcanisable elastomeric composition for components of tyres according to the present invention comprises 100 phr of at least (a) one diene elastomeric polymer. Preferably, the diene elastomeric polymer (a) which can be used in the present invention can be selected from those commonly used in sulphur-crosslinkable elastomeric materials, which are particularly suitable for producing tyres, that is to say, from elastomeric polymers or copolymers with an unsaturated chain having a glass transition temperature (Tg) generally below 20°C, preferably in the range from 0°C to -110°C. These polymers or copolymers may be of natural origin or may be obtained by solution polymerisation, emulsion polymerisation or gas-phase polymerisation of one or more conjugated diolefins, optionally mixed with at least one comonomer selected from monovinylarenes and/or polar comonomers in an amount not exceeding 60% by weight.

The conjugated diolefins generally contain from 4 to 12, preferably from 4 to 8 carbon atoms and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof.

1,3-butadiene and isoprene are particularly preferred.

Monovinylarenes, which may optionally be used as comonomers, generally contain from 8 to 20, preferably from 8 to 12 carbon atoms and may be selected, for example, from: styrene; 1-vinylnaphthalene; 2-vinylnaphthalene; various alkyl, cycloalkyl, aryl, alkylaryl or arylalkyl derivatives of styrene, such as, for example, α-methylstyrene, 3-methylstyrene, 4-propylstyrene, 4-cyclohexylstyrene, 4-dodecylstyrene, 2-ethyl-4-benzylstyrene, 4-p-tolyl-styrene, 4- (4-phenylbutyl)styrene, or mixtures thereof. Styrene is particularly preferred.

Polar comonomers that may optionally be used, can be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile or mixtures thereof.

Preferably, the diene elastomeric polymer (a) which can be used in the present invention can be selected, for example, from: cis-1,4-polyisoprene (natural or synthetic, preferably natural rubber), 3,4-polyisoprene, polybutadiene (in particular polybutadiene with a high content of 1,4-cis), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

According to a preferred embodiment, said vulcanisable elastomeric composition comprises at least 10% by weight, preferably between 20% by weight and 100% by weight, with respect to the total weight of said at least one diene elastomeric polymer (a), of natural rubber.

The above vulcanisable elastomeric composition may possibly comprise at least one elastomeric polymer of one or more monoolefins with an olefinic comonomer or derivatives thereof (a'). The monoolefins can be selected from: ethylene and α-olefins generally containing from 3 to 12 carbon atoms, such as for example propylene, 1-butene, 1-pentene, 1-hexene, 1-octene or mixtures thereof. The following are preferred: copolymers selected from ethylene and an α-olefin, optionally with a diene; isobutene homopolymers or copolymers thereof with small amounts of a diene, which are optionally at least partially halogenated. The diene possibly present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene or mixtures thereof. Among them, the following are particularly preferred: ethylene/propylene (EPR) copolymers or ethylene/propylene/diene (EPDM) copolymers; polyisobutene; butyl rubber; halobutyl rubbers, in particular chlorobutyl or bromobutyl rubbers; or mixtures thereof.

A diene elastomeric polymer (a) or an elastomeric polymer (a') functionalised by reaction with suitable terminating agents or coupling agents may also be used. In particular, the diene elastomeric polymers obtained by anionic polymerisation in the presence of an organometallic initiator (in particular, an organolithium initiator) may be functionalised by reacting the residual organometallic groups derived from the initiator with suitable terminating agents or coupling agents such as, for example, imines, carbodiimides, alkyltin halides, substituted benzophenones, alkoxysilanes or aryloxysilanes.

The present vulcanisable elastomeric composition comprises (b) modified silicate fibres with needle-shaped morphology of nanometric size.

In the present description, the term "needle-shaped morphology fibre" means an elongated element having a dimension (length) much greater than the diameter or the maximum cross-sectional dimension.

In particular, it is meant that said fibres have a ratio between the largest dimension (length) and the diameter or the maximum cross-sectional dimension (aspect ratio) of at least 2:1, preferably of at least 3:1, more preferably of at least 5:1.

Preferably, the fibres have an aspect ratio not greater than 1000:1, more preferably not greater than 100:1.

Preferably, said ratio is evaluated by microscopic observation, preferably performed on at least one hundred fibres.

Preferably, at least 70%, 80%, 90% of the fibres have the above aspect ratio.

The expression "nanometric size" referred to fibres means that the fibres have a diameter or maximum cross-sectional dimension of less than 500 nm.

Preferably, said fibres have a diameter or a maximum cross-sectional dimension of between 1 and 100 nm, more preferably of between 5 and 50 nm.

Preferably, said fibres have a length of less than 10 µm, more preferably between 0.1 and 10 µm, even more preferably of between 0.1 and 5 µm.

Preferably, said fibres are needle-shaped.

Advantageously, the silicate fibres used in the present invention are fibres selected from the group consisting of magnesium and/or aluminium and/or calcium silicate fibres and mixtures thereof. Examples of suitable silicate fibres are sepiolite fibres, paligorskite (also known as attapulgite) fibres, halloysite fibres, wollastonite fibres, and mixtures thereof. Sepiolite and halloysite fibres and mixtures thereof are particularly preferred.

Generally, halloysite fibres have a «tube» shape with an aspect ratio of between 2:1 and 30:1, more commonly of between 3:1 and 20:1.

Generally, sepiolite is needle-shaped and has aspect ratios of from 3:1 to 1000:1, more commonly from 5:1 to 100:1.

Generally, wollastonite is needle-shaped and has aspect ratios of from 3:1 to 20:1, more commonly from 10:1 to 20:1.

Examples of silicate fibres which can be used according to the present invention are the products marketed by Tolsa Group (http://www.tolsa.com/) under the name of Pangel S9 or Pansil 100, or by Applied Minerals Inc. under the name of Dragonite-XR^{™}.

In the preparation of compositions according to the present invention, the above silicate fibres with a needle-shaped morphology of nanometric size are modified according to a process that comprises:
- providing silicate fibres with needle-shaped morphology of nanometric size,
- suspending said fibres in a first liquid medium,
- placing the suspension of the fibres in contact with a compound precursor of amorphous silica, possibly dissolved or suspended in a second liquid medium, wherein said compound precursor of amorphous silica is selected from:
   I. the alkaline salts of silicic acid, of formula

      M₂O. n SiO₂ (I)

      where M = Na, K, Li and where n is comprised between 0.5 and 4, preferably n =0.5 or 1 or 3 and M=Na or K;
   II. the tetra-alkyl derivatives of silicic acid (or tetra-alkoxy-silanes) of formula

      (RO)₄Si (II)

      wherein the R groups, equal to or different from each other, represent C1-C6 alkyls,
   III. the halosilanes of formula

      SiX₄ or (RO)₃SiX or (RO)₂SiX₂ or (RO)SiX₃ (III)

      wherein the R groups, equal to or different from each other, represent C1-C6 alkyls, and X, equal to or different from each other, are selected from among chlorine, bromine and iodine, preferably chlorine;
- possibly providing water,
- possibly providing an acid or a base,
- hydrolyzing the compound precursor of amorphous silica and allowing the modification of the fibres, and
- separating the fibres thus modified from the final liquid medium.

The process of preparation of the modified fibres involves the suspension of the silicate fibres with needle-shaped morphology of nanometric size in a first liquid medium.

Preferably, said first liquid medium is selected from among water, alcohols, ethers, ketones and mixtures thereof, preferably it is selected from among water, C₁-C₆ alcohols and mixtures thereof, more preferably it is ethanol or isopropanol or water or mixtures thereof.

Preferably, said first liquid medium is used in a volume/weight ratio with respect to the fibres of between 2 and 20 mL/g, preferably between 4 and 10 mL/g.

The suspension of fibres in the first liquid medium can be carried out by various means, such as using a mechanical blade stirrer, a mechanical mixer, such as the type used for mixing paints and mortars, a magnetic stirrer or by sonication.

The process then involves placing the suspension of the fibres in contact with a compound precursor of amorphous silica, possibly dissolved or suspended in a second liquid medium.

By "compound precursor of amorphous silica" it is meant a compound or a mixture of compounds able to generate amorphous silica by hydrolysis in situ, by heating and/or in the presence of acids or bases.

Said compound precursor of amorphous silica is selected from:
I. the alkaline salts of silicic acid, of formula

   M₂O. n SiO₂ (I)

   where M = Na, K, Li and where n is comprised between 0.5 and 4, preferably n =0.5 or 1 or 3 and M=Na or K, which generate amorphous silica in the presence of acids,
II. the tetra-alkyl derivatives of silicic acid (or tetra-alkoxy-silanes) of formula

   (RO)₄Si (II)

   wherein the R groups, equal to or different from each other, represent C₁-C₆ alkyls, which generate amorphous silica in the presence of water and, preferably, acids or bases,
III. the halosilanes of formula

   SiX₄ or (RO)₃SiX or (RO)₂SiX₂ or (RO)SiX₃ (III)
wherein the R groups, equal to or different from each other, represent C₁-C₆ alkyls, and X, equal to or different from each other, are selected from among chlorine, bromine and iodine, preferably chlorine, which generate amorphous silica in the presence of water and, possibly, bases.

Preferably, said compound precursor of amorphous silica is selected from among the alkaline salts of silicic acid and the alkyl derivatives of silicic acid (II).

The compound precursor of amorphous silica is preferably used in a quantity such to generate amorphous silica in weight ratio comprised between 1:1 and 1:20, more preferably between 1:2 and 1:10, with respect to the weight of the fibres.

Generally, the hydrolysis of the compound precursor of amorphous silica requires the presence of water.

Preferably, the first and/or the second liquid medium and/or any acid or base comprise water.

Preferably, the second liquid medium comprises water.

Generally, the amount of water in equivalents is at least equal to the equivalents of hydrolysable groups present in the compound precursor of amorphous silica.

Preferably, the reaction medium - resulting from the mixing of the first liquid medium and possibly, if any, of the second liquid medium, of water, of the acid or of the base - prior to hydrolysis comprises water in a weight ratio of between 1:10 and 5:1 with respect to the weight of the compound precursor of amorphous silica.

Preferably, in a first variant of the process, the compound precursor of amorphous silica is a tetra-alkyl derivative of silicic acid (II) preferably selected from among tetra-methyl orthosilicate, tetra-ethyl orthosilicate, tetra n-propyl silicate, tetra-n-butyl silicate.

In this case, the precursor is advantageously reacted in the presence of acids or bases, preferably of bases.

Preferably, the basic compound is selected from among ammonia, ammonium hydroxide, hydroxylamine, alkyl, aryl or aryl-alkyl primary, secondary or tertiary amines, sodium hydroxide, potassium hydroxide, more preferably it is ammonia or ammonium hydroxide.

The basic compound is preferably used in quantities of between 1 and 40% by weight, more preferably of between 3 and 20% by weight, with respect to the weight of the compound precursor of amorphous silica.

The first liquid medium is preferably selected from among water, alcohols, ethers, ketones and mixtures thereof, preferably it is selected from among water, C₁-C₆ alcohols and mixtures thereof, more preferably it is ethanol or water or mixtures thereof.

Preferably, in a second variant of the process, the compound precursor of amorphous silica is an alkaline salt of silicic acid (s), preferably selected from among sodium orthosilicate, sodium metasilicate and potassium orthosilicate, able to release amorphous silica by hydrolysis in the presence of acids.

Preferably, a sodium silicate is used having a weight ratio of SiO₂/Na₂O of between 2 and 4, more preferably of between 3 and 3.7.

Preferred acids for example are strong mineral acids such as hydrochloric acid, sulphuric acid, phosphoric acid and nitric acid. The amount of acid compound used is at least such as to neutralise all the basic functionalities of the starting silicates. Preferably, the acid is used in a weight ratio of between 1:1 and 1:20 with respect to the weight of the compound precursor of amorphous silica.

The compound precursor of amorphous silica can be possibly dissolved or suspended in a second liquid medium, to then be placed in contact with the suspension of fibres. Preferably, the compound precursor of amorphous silica is dissolved in the second liquid medium.

The second liquid medium can be the same or different from the first liquid medium. A second liquid medium for the suspension or, preferably, the dissolution of the compound precursor of amorphous silica is selected from among water, alcohols, ethers, ketones and mixtures thereof, preferably it is water or a C₁-C₆ alcohol or mixtures thereof, more preferably it is ethanol or isopropanol or water or mixtures thereof.

Preferably, the second liquid medium comprises water.

Preferably, the water in second liquid medium is present in a quantity of between 1:1 and 30:1 by weight with respect to the amount of precursor of amorphous silica. Possibly, if not already present in the first and/or second liquid medium, water can be suitably added to the reaction medium where the fibre suspension has been placed in contact with the compound precursor of amorphous silica.

Preferably, the hydrolysis reaction of the compound precursor and the subsequent modification of the fibres are conducted at a temperature of at least 20 °C, more preferably at a temperature of between 40 and 80 °C.

Preferably, the hydrolysis reaction of the compound precursor and the subsequent modification of the fibres are conducted for a time of at least 10 minutes, preferably for a time of between 10 minutes and 10 hours.

Preferably, the hydrolysis reaction of the compound precursor and the subsequent modification of the fibres are conducted under stirring, preferably by mechanical stirring.

Preferably, the modified fibres are separated by filtration, preferably followed by washing - with a liquid medium of the same type as the first and/or the second liquid medium, preferably with alcohols or water or mixtures thereof - and by air or vacuum drying, possibly by heating.

According to the present invention, the silicate fibres with needle-shaped morphology of nanometric size modified according to the process described above are incorporated in the diene elastomeric polymer with the other components described herein to yield the vulcanisable elastomeric composition for components of tyres.

Preferably, said fibres are present in the vulcanisable elastomeric composition in an amount of from 1 phr to 70 phr, preferably from 3 phr to 50 phr, preferably from 25 phr to 3 phr.

The vulcanisable elastomeric composition according to the present invention may further comprise (c) a standard reinforcement filler.

By "standard reinforcement filler" it is meant a reinforcement filler commonly used in the tyre industry, preferably selected from among carbon black, precipitated amorphous silica, amorphous silica of natural origin, such as diatomaceous earth, calcium carbonate, titanium dioxide, talc, alumina, aluminosilicates, kaolin, unmodified silicate fibres and mixtures thereof.

By "unmodified" silicate fibres it is meant silicate fibres not subjected to the present modification process.

Possibly, the silicate fibres may be otherwise modified, for example they can be treated with a compatibiliser preferably selected from quaternary ammonium salts or phosphonium salts, known in the industry, as described for example in WO2012164433A1. The treatment of the fibres with the compatibiliser is carried out to improve the dispersion of the silicates within the elastomeric matrix.

Preferably, the vulcanisable elastomeric composition according to the present invention comprises (c) a standard reinforcement filler.

Preferably, the standard reinforcement filler is present, selected from among carbon black, precipitated amorphous silica, amorphous silica of natural origin, non-modified silicate fibres and mixtures thereof.

Preferably, the standard reinforcement filler (c) is present in the vulcanisable elastomeric composition in an amount generally ranging between 1 phr and 120 phr, preferably between 20 phr and 90 phr.

Preferably, the overall amount of modified fibres (b) and standard filler (c) present in the vulcanisable elastomeric composition according to the invention is at least 20 phr, more preferably at least 30 phr.

Preferably, the overall amount of modified fibres (b) and standard filler (c) present in the vulcanisable elastomeric composition according to the invention is in the range between 20 phr and 120 phr, more preferably between 30 phr and 90 phr.

Preferably, the standard reinforcement filler (c) is carbon black having a surface area not smaller than 20 m²/g (as determined by STSA - statistical thickness surface area according to ISO 18852:2005).

Preferably, said carbon black reinforcement filler (c) is present in the vulcanisable elastomeric composition in an amount ranging between 1 phr and 120 phr, preferably between 20 phr and 90 phr.

Preferably, the standard reinforcement filler is silica, selected from a pyrogenic silica or, preferably, a precipitated silica, with a BET surface area (measured according to the ISO 5794/1 standard) of between 50 m²/g and 500 m²/g, preferably between 70 m²/g and 200 m²/g.

The vulcanisable elastomeric composition according to the present invention comprises at least one vulcanising agent (d).

The vulcanising agent most advantageously used is sulphur, or, alternatively, sulphur-containing molecules (sulphur donors), with accelerators, activators and/or retardants known by the man skilled in the art.

Sulphur or its derivatives may advantageously be selected, for example, from: (i) soluble sulphur (crystalline sulphur); (ii) insoluble sulphur (polymeric sulphur); (iii) sulphur dispersed in oil (such as 33% sulphur, known by the trade name Crystex OT33 from Eastman); (iv) sulphur donors such as, for example, caprolactam disulphide (CLD), bis[(trialkoxysilyl)propyl]polysulphides, dithiophosphates; and mixtures thereof.

The vulcanising agent (d) is present in the vulcanisable elastomeric composition of the invention in an amount from 0.1 to 15 phr, preferably from 1 to 10 phr, even more preferably from 2 to 7 phr.

The vulcanisable elastomeric composition according to the present invention further comprises at least one silane coupling agent (e) able to interact with the silica possibly present as reinforcement filler and/or the silicates and to bind it to the diene elastomeric polymer during the vulcanisation.

Preferably, the silane coupling agent (e) used in the present invention is selected from those having at least one hydrolyzable silane substituent group, a silane which may be identified, for example, by the following general formula (IV):

(R)₃Si-CₙH₂ₙ-X (IV)

where the R groups, which may be the same or different, are selected from: alkyl, alkoxy or aryloxy groups or from halogen atoms, provided that at least one of the R groups is an alkoxy or aryloxy group or a halogen; n is an integer of between 1 and 6, inclusive; X is a group selected from: nitrous, mercapto, amino, epoxide, vinyl, imide, chlorine, -(S)ₘCₙH₂ₙ-Si-(R)₃ and -S-COR, where m and n are integers of between 1 and 6 inclusive and the R groups are as defined above.

Among the silane coupling agents (e), bis(3-triethoxysilylpropyl)tetrasulphide and bis(3-triethoxysilylpropyl)disulphide are particularly preferred. Said coupling agents may be used as such or in mixture with an inert filler (such as carbon black) so as to facilitate their incorporation into the vulcanisable elastomeric composition.

Preferably, aid silane coupling agent (e) is present in the vulcanisable elastomeric composition in an amount ranging between 0.1 phr and 15 phr, preferably between 0.5 phr and 10 phr.

Preferably, the silane coupling agent (e) and the vulcanising agent (d) are used in combination with accelerators (f) and/or activators (g) known by the man skilled in the art.

The accelerators (f) that are commonly used may be selected from: dithiocarbamates, guanidine, thiourea, thiazoles, sulphenamides, thiurams, amines, xanthates and mixtures thereof.

Preferably, the vulcanisation accelerators (f) are present in the vulcanisable elastomeric composition of the invention in amounts from 0.1 to 8 phr, preferably from 0.3 to 6 phr.

Activators (g) that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the vulcanisable elastomeric composition from ZnO and fatty acid, as well as Bi₂O₃, PbO, Pb₃O₄, PbO₂, or mixtures thereof.

Preferably, the vulcanisation activators (g) are present in the vulcanisable elastomeric composition of the invention in amounts from 0.2 to 15 phr, preferably from 0.5 to 10 phr.

Finally, the vulcanisable elastomeric materials according to the invention may comprise other commonly used additives, selected on the basis of the specific application for which the composition is intended. For example, said materials may be admixed with: antioxidants, anti-ageing agents, plasticisers, adhesives, anti-ozone agents, modifying resins, or mixtures thereof.

In particular, in order to further improve the processability, said vulcanisable elastomeric composition may be admixed with plasticisers generally selected from mineral oils, vegetable oils, synthetic oils, liquid polymers or mixtures thereof, such as, for example, aromatic oil, naphthenic oil, phthalates, soybean oil or mixtures thereof. The amount of plasticiser generally ranges from 0 phr and 70 phr, preferably from 5 phr to 30 phr.

The vulcanisable elastomeric compositions described above can be prepared by mixing together the polymeric components with the reinforcement filler and the other additives possibly present according to techniques known in the industry. The mixing can be performed, for example, using an open mixer of the "open-mill" type or an internal mixer of the type with tangential rotors (Banbury^{®}) or with interpenetrating rotors (Intermix), or in continuous mixers of the Ko-Kneader^{™} type (Buss^{®}) or of the twin-screw or multi-screw type.

A third aspect of the present invention relates to a component of a tyre for vehicle wheels comprising a vulcanised elastomeric material, obtainable by vulcanisation of the vulcanisable elastomeric composition comprising said modified fibres described above.

The vulcanisable elastomeric compositions described above can be vulcanised according to known techniques, due to the presence of sulphur-based vulcanising systems commonly used for diene elastomeric polymers. To this end, after one or more thermomechanical processing steps, a vulcanising agent, preferably sulphur-based, is incorporated in the materials, preferably together with vulcanisation accelerators. In the final treatment step, the temperature is generally kept below 120 °C and preferably below 100 °C, so as to prevent any undesired pre-crosslinking phenomena. Thereafter, the vulcanisable composition is incorporated in one or more components of the tyre and subjected to vulcanisation, according to known techniques.

The tyre component according to the invention is preferably selected from among the tread, carcass structure, belt structure, under-layer, anti-abrasive elongated element, sidewall, sidewall insert, mini-sidewall, under-liner, rubber layers, bead filler and sheets, more preferably tread, under-layer and sidewall insert.

A fourth aspect of the present invention relates to a tyre for vehicle wheels comprising at least one tyre component according to the invention, preferably selected from the tread, carcass structure, belt structure, under-layer, anti-abrasive elongated element, sidewall, sidewall insert, mini-sidewall, under-liner, rubber layers, bead filler and sheet, said component comprising a vulcanised elastomer material obtainable by vulcanisation of the vulcanisable elastomeric composition comprising said modified fibres described above.

Preferably, in the tyre according to the invention at least the tread comprises said vulcanised elastomeric material comprising modified silicate fibres according to the invention.

Preferably, in the tyre according to the invention, at least the tread and at least one component selected from under-layer, anti-abrasive elongated element, sidewall, sidewall insert, mini-sidewall, under-liner, rubber layers, bead filler or sheet comprise said vulcanised elastomeric material comprising modified silicate fibres according to the invention.

An embodiment according to the present invention relates to a tyre for vehicles, preferably a high-performance tyre (HP, SUV and UHP), comprising at least
- one carcass structure comprising at least one carcass layer having opposite lateral edges associated with respective bead structures;
- one belt structure applied in radially outer position with respect to the carcass structure,
- one tread band applied in radially outer position with respect to said belt structure, and possibly at least

one under-layer and/or one anti-abrasive elongated element and/or one sidewall and/or one sidewall insert and/or one mini-sidewall and/or one under-liner and/or one rubber layer and/or one sheet,
wherein at least one from among said carcass structure and/or tread band and/or belt structure and/or under-layer and/or anti-abrasive elongated element and/or sidewall and/or sidewall insert and/or mini-sidewall and/or under-liner and/or rubber layer and/or bead structures and/or sheet comprises said vulcanised elastomeric material described above.

Preferably, the tyre according to the invention comprises the above vulcanised elastomeric material at least in the tread.

Preferably, the tyre according to the invention comprises the above vulcanised elastomeric material at least in the under-layer.

Preferably, the tyre according to the invention comprises the above vulcanised elastomeric material at least in the sidewall insert.

Preferably, the tyre according to the invention comprises the above vulcanised elastomeric material in the tread and in one or more components selected from under-layer, anti-abrasive elongated element, sidewall, sidewall insert, mini-sidewall, under-liner, rubber layers, bead filler and sheet.

Preferably, the tyre according to the invention comprises the above vulcanised elastomeric material in the tread and in the under-layer.

Preferably, the tyre according to the invention comprises the above vulcanised elastomeric material in the tread and in the sidewall.

An embodiment according to the present invention is a tyre for vehicles, preferably for vehicles the driving performance of which takes advantage of an increase in the stiffness and a reduction in hysteresis and Payne effect of the elastomeric material, such as high-performance HP, UHP and SUV vehicles.

The tyre according to the invention can be employed on two- or four-wheeled vehicles, on heavy vehicles, or on light transport vehicles.

The tyre according to the invention can be for summer or winter use or for all seasons.

The tyre according to the present invention can be manufactured according to a process which comprises:
- building components of a green tyre on at least one forming drum;
- shaping, moulding and vulcanising the tyre;
wherein building components of a green tyre comprises:
- manufacturing at least one green component comprising the vulcanisable elastomeric composition as described above.

In the present description, the term green is generally used to indicate a material, a composition, a component or a tyre not yet vulcanised.

### BRIEF DESCRIPTION OF THE DRAWINGS

Figure 1 shows a radial half-section of a tyre for vehicle wheels.
Figure 2 shows the diagrams of thermogravimetric analyses conducted on a sample of modified halloysite fibres (1) and on a sample of non-modified halloysite fibres (2).
Figure 3 shows the diagram of the dynamic shear elastic modulus G' pattern of specimens of the elastomeric materials (A), (B) (comparative) and (C) (according to the invention) as the strain increases.

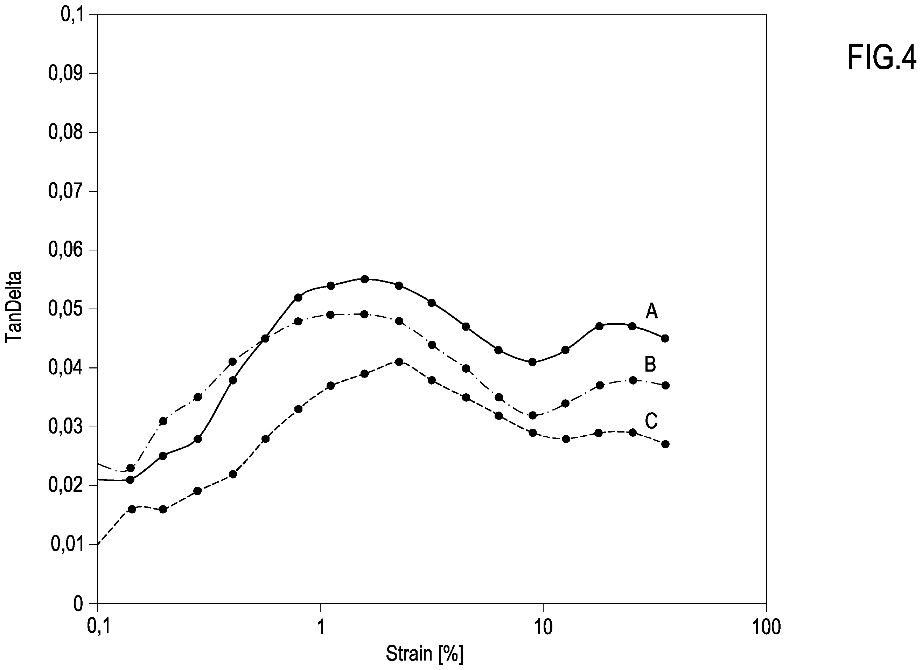

Figure 4 shows the diagram of the Tan delta pattern, illustrative of the hysteresis, of the specimens of the elastomeric materials (A), (B) (comparative) and (C) (according to the invention) as the strain increases.

### DESCRIPTION OF EXAMPLES OF THE INVENTION

The description of some examples of the invention is given hereinafter by way of non-limiting indication.

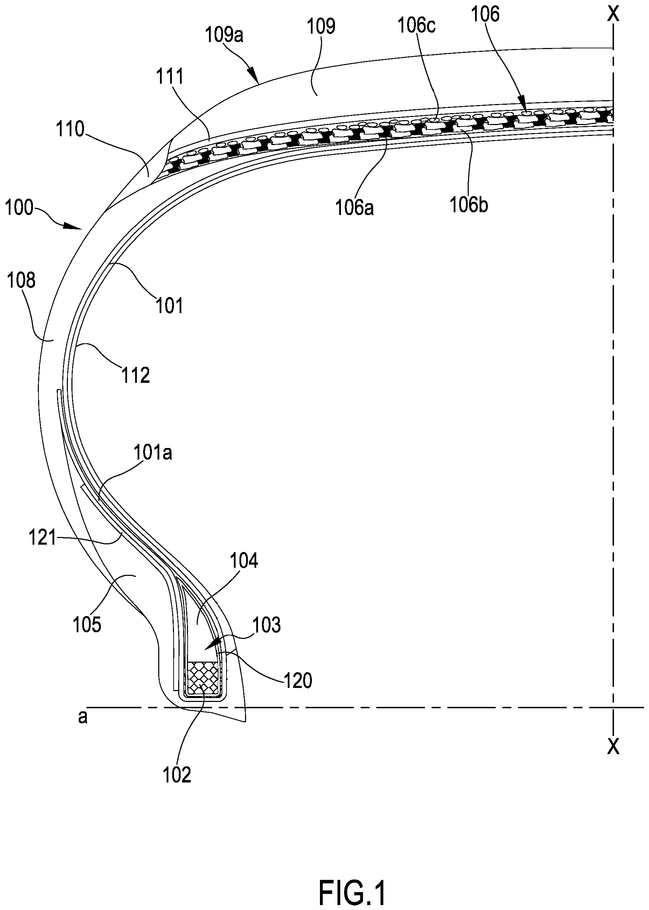

Figure 1 shows a radial half-section of a tyre for vehicle wheels.

In Figure 1, "a" indicates an axial direction and "X" indicates a radial direction, in particular X-X indicates the outline of the equatorial plane. For simplicity, Figure 1 shows only a portion of the tyre, the remaining portion not shown being identical and arranged symmetrically with respect to the equatorial plane "X-X".

Tyre 100 for four-wheeled vehicles comprises at least one carcass structure, comprising at least one carcass layer 101 having respectively opposite end flaps engaged with respective annular anchoring structures 102, referred to as bead cores, possibly associated to a bead filler 104.

The tyre area comprising the bead core 102 and the filler 104 forms a bead structure 103 intended for anchoring the tyre onto a corresponding mounting rim, not shown.

The carcass structure is usually of radial type, i.e. the reinforcement elements of the at least one carcass layer 101 lie on planes comprising the rotational axis of the tyre and substantially perpendicular to the equatorial plane of the tyre. Said reinforcement elements generally consist of textile cords, such as rayon, nylon, polyester (for example polyethylene naphthalate, PEN). Each bead structure is associated to the carcass structure by folding back of the opposite lateral edges of the at least one carcass layer 101 around the annular anchoring structure 102 so as to form the so-called carcass flaps 101a as shown in Figure 1.

In one embodiment, the coupling between the carcass structure and the bead structure can be provided by a second carcass layer (not shown in Figure 1) applied in an axially outer position with respect to the first carcass layer.

An anti-abrasive strip 105 is arranged in an outer position of each bead structure 103.

The carcass structure is associated to a belt structure 106 comprising one or more belt layers 106a, 106b placed in radial superposition with respect to one another and with respect to the carcass layer, having typically textile and/or metallic reinforcement cords incorporated within a layer of vulcanised elastomeric material. Such reinforcement cords may have crossed orientation with respect to a direction of circumferential development of tyre 100. By "circumferential" direction it is meant a direction generally facing in the direction of rotation of the tyre.

At least one zero-degree reinforcement layer 106c, commonly known as a "0° belt", may be applied in a radially outermost position to the belt layers 106a, 106b, which generally incorporates a plurality of elongated reinforcement elements, typically metallic or textile cords, oriented in a substantially circumferential direction, thus forming an angle of a few degrees (such as an angle of between about 0° and 6°) with respect to a direction parallel to the equatorial plane of the tyre, and coated with vulcanised elastomeric material.

A tread band 109 of vulcanised elastomeric material is applied in a position radially outer to the belt structure 106.

Moreover, respective sidewalls 108 of vulcanised elastomeric material are applied in an axially outer position on the lateral surfaces of the carcass structure, each extending from one of the lateral edges of tread 109 at the respective bead structure 103.

In a radially outer position, the tread band 109 has a rolling surface 109a intended to come in contact with the ground. Circumferential grooves, which are connected by transverse notches (not shown in Figure 1) so as to define a plurality of blocks of various shapes and sizes distributed over the rolling surface 109a, are generally made on this surface 109a, which for simplicity is represented smooth in Figure 1. An under-layer 111 of vulcanised elastomeric material can be arranged between the belt structure 106 and the tread band 109.

A strip consisting of elastomeric composition 110, commonly known as "mini-sidewall", of vulcanised elastomeric material can optionally be provided in the connecting zone between sidewalls 108 and the tread band 109, this mini-sidewall generally being obtained by co-extrusion with the tread band 109 and allowing an improvement of the mechanical interaction between the tread band 109 and sidewalls 108. Preferably, the end portion of sidewall 108 directly covers the lateral edge of the tread band 109.

In the case of tubeless tyres, a rubber layer 112, generally known as "liner", which provides the necessary impermeability to the inflation air of the tyre, can also be provided in a radially inner position with respect to the carcass layer 101.

The rigidity of the tyre sidewall 108 can be improved by providing the bead structure 103 with a reinforcement layer 120 generally known as "flipper" or additional strip-like insert.

Flipper 120 is a reinforcement layer which is wound around the respective bead core 102 and the bead filler 104 so as to at least partially surround them, said reinforcement layer being arranged between the at least one carcass layer 101 and the bead structure 103 . Usually, the flipper is in contact with said at least one carcass layer 101 and said bead structure 103.

Flipper 120 typically comprises a plurality of textile cords incorporated within a layer of vulcanised elastomeric material.

The bead structure 103 of the tyre may comprise a further protective layer which is generally known by the term of "chafer" 121 or protective strip and which has the function of increasing the rigidity and integrity of the bead structure 103.

Chafer 121 usually comprises a plurality of cords incorporated within a layer of vulcanised elastomeric material. Such cords are generally made of textile materials (such as aramide or rayon) or metal materials (such as steel cords).

A layer or sheet of elastomeric material can be arranged between the belt structure and the carcass structure. The layer can have a uniform thickness. Alternatively, the layer may have a variable thickness in the axial direction. For example, the layer may have a greater thickness close to its axially outer edges with respect to the central (crown) zone.

Advantageously, the layer or sheet can extend on a surface substantially corresponding to the extension surface of said belt structure.

In a preferred embodiment, a layer or sheet of elastomeric material as described above can be placed between said belt structure and said tread band, said additional layer or sheet extending preferably on a surface substantially corresponding to the extension surface of said belt structure.

The elastomeric composition according to the present invention is as defined in claim 1.

The elastomeric composition according to the present invention can be advantageously incorporated in one or more of the components of the tyre selected from the belt structure, carcass structure, tread band, under-layer, sidewall, mini-sidewall, sidewall insert, bead, flipper, chafer, sheet and anti-abrasive strip. According to an embodiment not shown, the tyre may be a tyre for motorcycle wheels which is typically a tyre that has a straight section featuring a high tread camber.

According to an embodiment not shown, the tyre may be a tyre for heavy transport vehicle wheels, such as trucks, buses, trailers, vans, and in general for vehicles in which the tyre is subjected to a high load.

Preferably, such a tyre is adapted to be mounted on wheel rims having a diameter equal to or greater than 17.5 inches for directional or trailer wheels.

The following further examples are now provided to better illustrate the present invention:

### Example 1

Preparation of modified halloysite fibres (basic catalysis)

### Materials

Halloysite (Dragonite XR Applied Minerals Inc.): 5 g
TEOS (Tetraethyl orthosilicate): 7.54 mL (equivalent to 1.88 g of amorphous silica)
EtOH, H₂O, NH₄OH (aqueous solution 30% by weight)

### Procedure

TEOS (7.54 mL) was dissolved in ethanol (20 mL) in a two-necked flask and was heated in an oil bath at 40 °C; water (1.54 ml) was then dropped from the side neck and was left under stirring for one hour.

This solution was then added to the flask containing halloysite (5 g), previously suspended in ethanol (50 mL) by sonication (30 min).

The bath temperature was raised to 60 °C and the base (2 mL) was added dropwise. It was then left to react at this temperature under vigorous stirring for 5 hours.

Finally, the solid was filtered on a Buchner filter and washed with ethanol, drying in a stove at 105 °C for 8 hours.

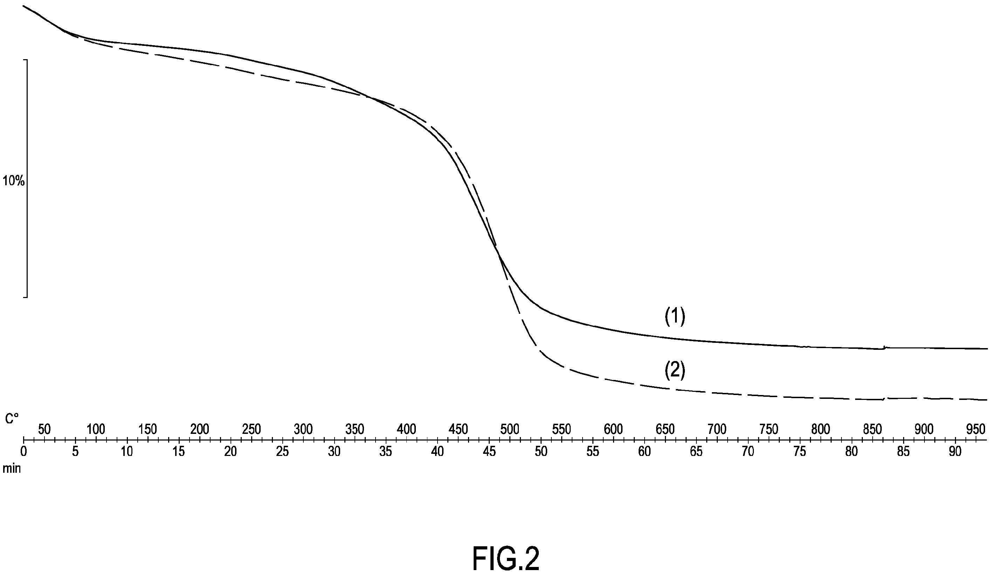

A sample of halloysite fibres thus modified was subjected to thermogravimetric analysis (TGA, Figure 2).

As can be seen from the diagram, the sample of halloysite fibres treated with TEOS shows a higher residue at 850 °C (86%) than that of untreated halloysite fibres (84%).

### Example 2

### Preparation of modified sepiolite fibres (basic catalysis)

### Materials

Sepiolite Pangel S9: 5 g
TEOS (Tetraethyl orthosilicate): 3.22 g (equivalent to 0.87 g of precipitated amorphous silica)
EtOH, H₂O, NH₄OH (aqueous solution 30% by weight)

### Procedure

TEOS (3.22 g) was dissolved in ethanol (15 mL) in a two-necked flask and was heated in an oil bath at 40 °C; water (0.7 ml) was then dropped from the side neck and was left under stirring for one hour.

This solution was then added to sepiolite (5 g), previously suspended in ethanol (50 mL) by mechanical stirring (30 min).

The bath temperature was raised to 60 °C and the base (2 mL) was added dropwise. It was then left to react at this temperature under vigorous stirring for 5 hours. Finally, the solid was filtered on a Buchner filter and washed with ethanol, drying the solid in a stove.

### Example 3

### Preparation of vulcanisable elastomeric materials comprising halloysite fibres modified as per example 1

The halloysite fibres modified as per example 1 were incorporated together with conventional silica in vulcanisable elastomeric materials for tyre components (C). These vulcanisable elastomeric materials (C) according to the invention were compared with conventional elastomeric materials, including comprising standard fillers, in particular conventional silica alone (A) or conventional silica together with non-modified halloysite fibres (B).

The elastomeric materials of these examples are based on standard compositions suitable for various applications, such as elastomeric under-layer materials (car and heavy vehicles), soft bead (heavy vehicles), sidewall insert (car), or sidewall and are similar to tread formulations (heavy vehicles). Therefore, the results shown by these elastomeric materials are representative of those obtainable with elastomeric materials for tyre components filled with silica or with silica and carbon black in general.

The following Table 1 shows the compositions in phr of the vulcanisable elastomeric materials (A), (B) and (C):

**Table 1**

| | (A) Reference | (B) Reference | (C) Invention |
|---|---|---|---|
| Filler | Silica | Silica + Halloysite | Silica + Halloysite mod. ex. 1 |
| Zeosil 1115MP | 45 | 35 | 35 |
| Halloysite | 0 | 12.75 | 0 |
| Halloysite-TEOS | 0 | 0 | 12.75 |
| NR | 100 | 100 | 100 |
| Stearic acid | 2 | 2 | 2 |
| TESPT silane | 3.6 | 3.6 | 3.6 |
| ZnO | 3.6 | 3.6 | 3.6 |
| 6-PPD | 2 | 2 | 2 |
| TBBS | 1.8 | 1.8 | 1.8 |
| Sulphur | 2.6 | 2.6 | 2.6 |

wherein NR: natural rubber; TESPT: Bis[3-(triethoxysilyl)propyl]tetrasulphide; Zeosil 1115MP: precipitated synthetic amorphous silica (Rhodia); halloysite-TEOS: halloysite modified with tetraethyl orthosilicate; ZnO: zinc oxide; 6-PPD: N-(1,3-dimethylbutyl)-N'-phenyl-p-phenylenediamine; TBSS: N-tert-butyl-2-benzothiazylsulphenamide.

In substituting the 10 phr silica of the elastomeric material A with the halloysite (elastomeric material B) and with the modified halloysite (C), the higher density of halloysite (2.55 g/cm³) compared to silica (2.00 g/cm³) was kept into account and the substitution was made with the same volume.

The vulcanisable elastomeric materials of the examples were prepared as follows (the quantities of the various components are given in phr).

All the components, except for sulphur and the vulcanisation accelerator (TBBS), were mixed in an internal mixer (Brabender) for about 5 minutes (1st step). As soon as the temperature reached 145 °C ± 5 °C, the elastomeric material was unloaded. Sulphur and the accelerator (TBBS) were added and mixing was carried out in an open roll mixer (2nd step).

### Example 4

### Preparation of vulcanisable elastomeric materials comprising sepiolite fibres modified as per example 2

Sepiolite fibres modified as per example 2 were incorporated together with conventional silica in vulcanisable elastomeric materials for tyre components (E). These vulcanisable elastomeric materials (E) according to the invention were compared with conventional elastomeric materials, including comprising standard fillers, in particular conventional silica alone (A) or conventional silica together with non-modified sepiolite fibres (D).

The following Table 2 shows the compositions in phr of the vulcanisable elastomeric materials (A), (D) and (E):

**Table 2**

| | (A) Reference | (D) Reference | (E) Invention |
|---|---|---|---|
| Filler | Silica | Silica + Sepiolite | Silica + Sepiolite mod. ex. 2 |
| Zeosil 1115MP | 45 | 35 | 35 |
| Sepiolite | 0 | 10 | 0 |
| Sepiolite-TEOS | 0 | 0 | 10 |
| NR | 100 | 100 | 100 |
| Stearic acid | 2 | 2 | 2 |
| TESPT silane | 3.6 | 3.6 | 3.6 |
| ZnO | 3.6 | 3.6 | 3.6 |
| 6-PPD | 2 | 2 | 2 |
| TBBS | 1.8 | 1.8 | 1.8 |
| Sulphur | 2.8 | 2.8 | 2.8 |

in which the components shown correspond to those shown in example 3.

In this case, 10 phr silica of the elastomeric material (A) were substituted with 10 phr sepiolite (D) or 10 phr of sepiolite modified with TEOS (E), i.e. at the same weight (and without considering the volumes, as was instead done for the halloysite in example 2), since the difference in density between silica and sepiolite was smaller with respect to the case of halloysite (sepiolite density of 2.30 g/cm³ vs. 2.00 g/cm³ density of silica).

All the components, except for sulphur and the vulcanisation accelerator (TBBS), were mixed in an internal mixer (Brabender) for about 5 minutes (1st step). As soon as the temperature reached 145 °C ± 5 °C, the elastomeric material was unloaded. Sulphur and the accelerator (TBBS) were added and mixing was carried out in an open roll mixer (2nd step).

### Example 5

### Preparation of vulcanisable elastomeric materials comprising halloysite fibres modified as per example 1 and sepiolite fibres modified as per example 2

Sepiolite fibres modified as per example 2 and halloysite fibres modified as per example 1 were incorporated together with conventional silica and carbon black in conventional elastomeric compositions to yield the vulcanisable elastomeric materials for tyre components (G) and (H). These vulcanisable elastomeric material (G) and (H) according to the invention were compared with similar elastomeric materials, but comprising standard fillers, in particular conventional silica and carbon black (F), and with reference elastomeric materials comprising conventional silica, black carbon and sepiolite modified with quaternary ammonium salts (Pangel B5), described in example 1 of WO2012/164433

The comparison was made by substituting 10 phr of conventional silica of the reference mixture (F) with 7 phr of sepiolite fibres modified with quaternary ammonium salts (I), with 7 phr of sepiolite fibres modified as per example 2 (G) or with 9 phr of halloysite fibres modified as per example 1 (H), respectively, so as to obtain elastomeric compositions which after vulcanisation showed similar hardness and reinforcement properties.

The following Table 3 shows the compositions in phr of the vulcanisable elastomeric materials (F), (I), (G) and (H):

**Table 3**

| | (F) Reference | (I) Reference | (G) Invention | (H) Invention |
|---|---|---|---|---|
| Filler | Silica + Carbon black | Silica + Carbon black + Sepiolite mod. NR4⁺ | Silica + Carbon black + Sepiolite mod. ex. 2 | Silica + Carbon black + Halloysite mod. ex. 1 |
| CB N550 | 25 | 25 | 25 | 25 |
| Ebrosil H180AT | 30 | 20 | 20 | 20 |
| Sepiolite Mod. NR4⁺ (Pangel B5) | | 7 | | |
| Halloysite mod. TEOS | | | | 9 |
| Sepiolite mod. TEOS | | | 7 | |
| BR (Nd) | 60 | 60 | 60 | 60 |
| IR | 40 | 40 | 40 | 40 |
| Silane TESPT 50% of CB | 5 | 5 | 5 | 5 |
| Stearic acid | 1 | 1 | 1 | 1 |
| ZnO | 4 | 4 | 4 | 4 |
| TMQ | 1 | 1 | 1 | 1 |
| 6-PPD | 1.5 | 1.5 | 1.5 | 1.5 |
| TBBS 80 | 4 | 4 | 4 | 4 |
| Sulphur | 2.3 | 2.3 | 2.3 | 2.3 |

wherein BR (Nd): high-cis neodymium polybutadiene (Europrene Versalis 40); IR: synthetic polyisoprene (SKI3 produced by Nitzhnekamsk); Silane TESPT 50% on CB (carbon black); CB N550: carbon black; Ebrosil H180AT: precipitated silica; TMQ: polymerised 2,2,4-trimethyl-1,2-dihydroquinoline, NR4⁺ Quaternary ammonium salts; Pangel B5: Sepiolite modified with quaternary ammonium salts, marketed by Tolsa Group, and the other components have the above meanings.

The mixing was conducted in three steps using an internal tangential rotor mixer (Pomini PL 1.6): in the first step, polymers, fillers, stearic acid and silane were introduced and after 4-5 minutes of mixing, until reaching 135 °C ± 5 °C, the composition was unloaded.

After 12-24 hours, in the second step, carried out using the same mixer, ZnO, TMQ and 6-PPD were introduced. The mixing continued for about 3 minutes, until reaching 125 °C ± 5 °C, when the composition was unloaded.

After 12-24 hours, in the third step, carried out using the same mixer, TBBS and sulphur were introduced. The mixing continued for about 2 minutes, until reaching 95°C ± 5 °C, when the composition was unloaded.

The following summary table 4 shows the numbers of the examples relating to the modified fibres and to the elastomeric materials that incorporate them according to the invention:

**Table 4**

| Filler | | Elastomeric materials |
|---|---|---|
| Silica | Ref. | Ex. 3 A |
| | | Ex. 4 A |
| Silica + Halloysite | Ref. | Ex. 3 B |
| Silica + Sepiolite | Ref. | Ex. 4 D |
| Silica + Halloysite mod. Ex. 1 | Inv. | Ex. 3 C |
| Silica + Sepiolite mod. Ex. 2 | Inv. | Ex. 4 E |
| Silica + Carbon black | Ref. | Ex. 5 F |
| Silica + Carbon Black + Sepiolite mod. quaternary ammonium salts | Ref. | Ex. 5 I |
| Silica + Carbon black + Halloysite mod. Ex. 1 | Inv. | Ex. 5 H |
| Silica + Carbon black + Sepiolite mod. Ex. 2 | Inv. | Ex. 5 G |

### Example 6

### Evaluation of the static and dynamic mechanical properties of the elastomeric materials (A), (B) and (C) after vulcanisation

The static mechanical properties were measured according to the ISO 37:2005 standard at different elongation (50%, 100%, 300%) on samples of the elastomeric materials (A), (B) and (C) of example 3, vulcanised at 170 °C for 10 minutes. The tensile tests were carried out on Dumbell specimens. The results obtained are shown in Table 5.

The dynamic mechanical properties were evaluated using a Monsanto R.P.A. 2000 rheometer according to the following method: cylindrical test samples having weights in the range from 4.5 g to 5.5 g were obtained by punching from the vulcanisable elastomeric composition of samples (A), (B) and (C), the samples were vulcanised in the "RPA" instrument (at 170 °C for 10 minutes) and were subjected to the measurement of the dynamic elastic shear modulus (G') at 70 °C, frequency of 10 Hz, strain between 0.1% and 50%. The Payne effect was evaluated by the difference between the modules (G') at 35% and 0.4%.

The elastomeric materials (A), (B) and (C) prepared in example 3 and vulcanised at 170 °C for 10 minutes were subjected to measurement of the static and dynamic mechanical properties according to the previously described methods and the measured values are shown in the following Table 5:

**Table 5**

| | (A) Reference | (B) Reference | (C) Invention |
|---|---|---|---|
| | Silica | Silica + Halloysite | Silica + Halloysite mod. ex. 1 |
| Ca0.5 [MPa] | 1.38 | 1.21 | 1.31 |
| Ca1 [MPa] | 2.86 | 2.52 | 2.77 |
| CR [MPa] | 21.97 | 17.29 | 18.93 |
| AR [%] | 361.4 | 333.0 | 375.6 |
| G' (0.4%) | 1.28 | 1.18 | 1.19 |
| ΔG' (0.4%-35%) / G' (0.45) | 0.32 | 0.26 | 0.22 |
| Tan delta max | 0.055 | 0.048 | 0.039 |

wherein Ca0.5 and Ca1 indicate the strain (unit of measure: MPa) measured at 50% and 100% strain, respectively, CR indicates the strain at the elongation at break (MPa), AR [%] indicates the elongation at break, G' (0.4%) is the elastic shear modulus measured at 70 °C with a 0.4% strain amplitude; ΔG' (0.4-35%)/G' (0.4%) indicates the relative difference of the dynamic modulus between 0.4% and 35% of dynamic strain, as an index of the Payne effect; Tan delta max is the maximum Tan delta value recorded in the sequence of strains from 0.4% to 35% dynamic shear strain at 70 °C.

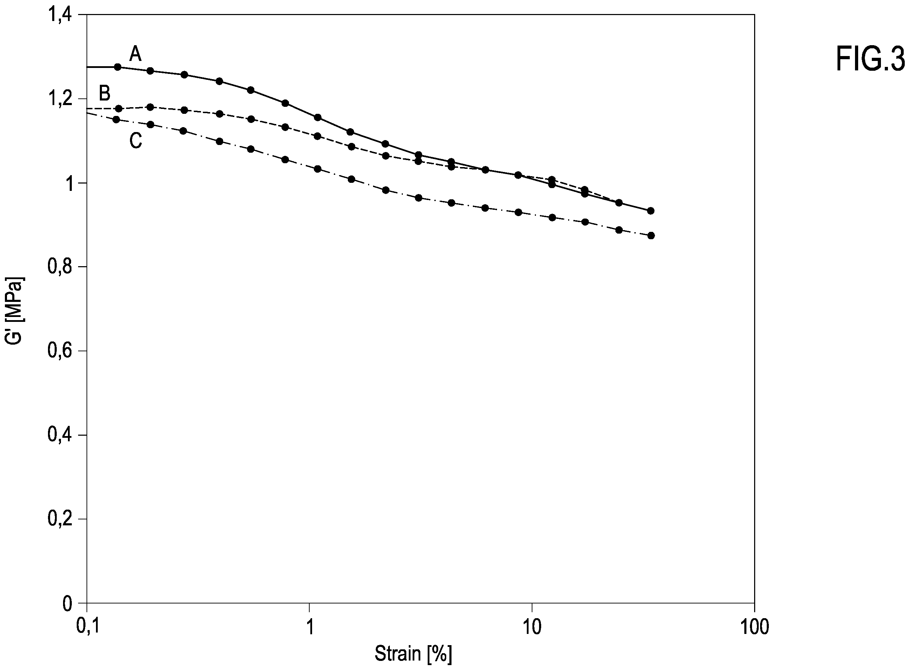

The analysis of the data shown in Table 5 and the pattern of the curves in the graphs in Figures 3 (dynamic elastic shear modulus G' vs. strain %) and 4 (Tan delta vs strain %) show that by substituting an aliquot of silica in a conventional elastomeric material (a) with an equal volume of unmodified halloysite, an elastomeric material (B) is obtained having slightly lower hysteresis (see tan delta) and Payne effect, but also a lower reinforcement: these features do not make the elastomeric material (B) advantageous compared to the conventional elastomeric material (A).

On the other hand, by incorporating the halloysite modified with TEOS in the elastomeric material (C), both hysteresis and the Payne effect are further reduced, and also surprisingly the static modulus values return to the level of those of the reference elastomeric material comprising silica alone (A): in other words, an elastomeric material is obtained that is very advantageous, equivalent in reinforcement but improving the hysteresis and the Payne effect with respect to the conventional elastomeric material (A).

### Example 7

### Evaluation of the static and dynamic mechanical properties of the elastomeric materials (A), (D) and (E) after vulcanisation

The vulcanisable elastomeric materials (A), (D) and (E) prepared in example 4 were subjected to measurement of the static and dynamic mechanical properties according to the methods described above. The values measured for these three samples are shown in the following Table 6:

**Table 6**

| | (A) Reference silica | (D) Reference Silica + Sepiolite | (E) Invention Silica + Sepiolite mod. ex. 2 |
|---|---|---|---|
| Ca0.5 [MPa] | 1.45 | 2.47 | 1.72 |
| Ca1 [MPa] | 2.91 | 5.63 | 4.12 |
| Ca3 [MPa] | 16.76 | 18.5 | 18.08 |
| CR [MPa] | 21.57 | 23.39 | 22.04 |
| AR [%] | 361.05 | 371.34 | 365.07 |
| G' (0.4%) | 1.51 | 1.48 | 1.28 |
| ΔG' (0.4%-35%) / G' (0.4%) | 0.30 | 0.31 | 0.26 |
| Tan delta max | 0.071 | 0.074 | 0.067 |

The above data show that by substituting an aliquot of silica in a conventional elastomeric material (A) with a corresponding amount of unmodified sepiolite (D), higher static modules and a comparable ΔG'/G' Payne effect are advantageously obtained, but an undesirable increase in the hysteresis, shown in the table as Tan delta max, is obtained in the sequence of dynamic shear strains from 0.4% to 35% carried out at 70 °C.

Conversely, by incorporating sepiolite modified by treatment with TEOS according to example 2 of the present invention (E) in the elastomeric material, an increase of the static modules is still seen, i.e. greater reinforcement compared to silica, but surprisingly at the same time, a lower Payne effect (lower value of ΔG' (0.4%-35%)/G' (0.4%)), and especially a lower hysteresis (reduction of Tan delta max) are observed.

### Example 8

### Evaluation of the static and dynamic mechanical properties of the elastomeric materials (F), (G) and (H) after vulcanisation

The vulcanisable elastomeric materials (F), (G) and (H) prepared in example 5 were subjected to measurement of the static and dynamic mechanical properties according to the methods described above.

Moreover, the dynamic mechanical properties were measured using an Instron dynamic device in the traction-compression mode according to the following methods. A test piece of cross-linked material having a cylindrical shape (length = 25 mm; diameter = 18 mm), preloaded in compression up to a longitudinal strain of 20% with respect to the initial length and maintained at the predetermined temperature (23 °C or 70 °C) for the whole duration of the test was subjected to a dynamic sinusoidal strain having an amplitude of ± 7.5% with respect to the length under pre-load, with a frequency of 100 Hz. The dynamic mechanical properties are expressed in terms of dynamic elastic modulus (E) and Tan delta (loss factor). The Tan delta value was calculated as the ratio between the viscous dynamic module (E") and the dynamic elastic modulus (E), both being determined by the above dynamic measurements.

The values measured for these three samples are shown in the following Table 7:

**Table 7**

| | (F) Reference | (I) Reference | (G) Invention | (H) Invention |
|---|---|---|---|---|
| Filler | Silica + Carbon black | Silica + Carbon black + Sepiolite mod. NR4⁺ | Silica + Carbon black + Sepiolite mod. ex. 2 | Silica + Carbon black + Halloysite mod. ex. 1 |
| Ca0.5[MPa] | 2.02 | 2.57 | 1.94 | 1.92 |
| Ca1 [MPa] | 3.99 | 5.91 | 4.06 | 3.84 |
| CR[MPa] | 10.5 | 12.4 | 11.60 | 9.8 |
| AR[%] | 228.4 | 201.0 | 257.1 | 232.5 |
| IRHD 23 °C | 74.6 | 75.9 | 71.1 | 72.2 |
| IRHD 100 °C | 72.0 | 74.4 | 70.6 | 70.8 |
| delta IRHD | 2.6 | 1.5 | 0.5 | 1.4 |
| E' [MPa ] 23°C | 8.13 | 9.87 | 7.55 | 7.49 |
| E' [MPa] 70 °C | 7.85 | 9.65 | 7.64 | 7.41 |
| Tan delta 23 °C | 0.129 | 0.116 | 0.098 | 0.103 |
| Tan Delta 70 °C | 0.086 | 0.079 | 0.071 | 0.072 |
| G' 70°C (9%) [Mpa] | 1.82 | 1.78 | 1.50 | 1.64 |
| Tan Delta 70 °C (9%) | 0.114 | 0.112 | 0.094 | 0.096 |
| d_G' (0.5-10) [Mpa] | 0.8 | 1.1 | 0.7 | 0.5 |

The data shown in Table 7 suggest that the incorporation of modified sepiolite or halloysite fibres according to the present invention in elastomeric compositions for tyres comprising also carbon black and precipitated silica imparts a set of mechanical properties of particular interest to the corresponding elastomeric materials.

In fact, the elastomeric materials according to the invention (G) and (H), for equal static and dynamic reinforcement with respect to the reference with conventional filler (F), show a more limited variability of the hardness (delta IRHD) and of the hot (70 °C) and cold (23 °C) dynamic modules. Moreover, the materials according to the invention show a decrease in the Payne effect (difference between G' at 10% and G' at 0.5% at 70 °C, 10 Hz) and above all a significant hysteresis reduction, both in hot and in cold.

The sepiolite fibres modified with quaternary ammonium salts present in the reference elastomeric material (I) very strongly influence the static modules, resulting in particular in lower values of elongation at break both with respect to the elastomeric materials comprising a conventional filler (F) and with respect to the elastomeric materials according to the invention (G) and (H). Moreover, the reference elastomeric material (I) shows an increase in hardness and only a modest reduction of the delta hardness, in particular in comparison to the elastomeric material according to the invention (G), which comprises the same type of fibre (i.e. sepiolite) as the reference material (I) but otherwise modified. Finally, the reference elastomeric material (I) shows a worsening of hysteresis, especially if measured in shear, and a worsening of the Payne effect with respect to the elastomeric materials according to the invention (G) and (H).

In conclusion, the above Tables show that the mechanical properties of the elastomeric materials (C), (E), (G) and (H) according to the invention make them particularly suitable for the production of tyres provided with a high reinforcement and at the same time with reduced rolling resistance.

## Claims

1. Vulcanisable elastomeric composition for components of tyres comprising at least:
a) 100 phr of at least one diene elastomeric polymer,
b) from 1 to 80 phr of modified silicate fibres with needle-shaped morphology of nanometric size, wherein said fibres have an aspect ratio of at least 2:1 and a diameter or maximum cross-sectional dimension of less than 500 nm, said modified fibres being at least partially coated with amorphous silica deposited on the surface,
(c) from 0 to 120 phr of a standard reinforcement filler,
(d) from 0.1 to 15 phr of a vulcanising agent, and
(e) from 0.1 to 20 phr of a coupling agent,
wherein said modified fibres are obtainable according to a process that comprises:
- providing silicate fibres with needle-shaped morphology of nanometric size having an aspect ratio of at least 2:1 and a diameter or maximum cross-sectional dimension of less than 500 nm,
- suspending said fibres in a first liquid medium,
- placing the suspension of the fibres in contact with a compound precursor of amorphous silica, possibly dissolved or suspended in a second liquid medium, wherein said compound precursor of amorphous silica is selected from:
I. the alkaline salts of silicic acid, of formula
M₂O. n SiO₂ (I)
where M = Na, K, Li and where n is comprised between 0.5 and 4, preferably n =0.5 or 1 or 3 and M=Na or K;
II. the tetra-alkyl derivatives of silicic acid (or tetra-alkoxy-silanes) of formula
(RO)₄Si (II)
wherein the R groups, equal to or different from each other, represent C1-C6 alkyls,
III. the halosilanes of formula
SiX₄ or (RO)₃SiX or (RO)₂SiX₂ or (RO)SiX₃ (III)
wherein the R groups, equal to or different from each other, represent C1-C6 alkyls, and X, equal to or different from each other, are selected from among chlorine, bromine and iodine, preferably chlorine;
- possibly providing water,
- possibly providing an acid or a base,
- hydrolyzing the compound precursor of amorphous silica and allowing the modification of the fibres, and
- separating the fibres thus modified from the final liquid medium.

2. Composition as claimed in claim 1wherein said fibres have an aspect ratio of at least 3:1, preferably of at least 5:1.

3. Composition as claimed in any one of the preceding claims wherein said fibres are selected from among fibres of sepiolite, fibres of palygorskite, fibres of halloysite, fibres of wollastonite, and mixtures thereof, preferably from among fibres of sepiolite, of halloysite and mixtures thereof.

4. Composition as claimed in any one of the preceding claims wherein said modified fibres are present in a quantity from 3 phr to 50 phr, preferably from 3 phr to 25 phr.

5. Composition as claimed in any one of the preceding claims wherein a standard reinforcement filler (c) is present, selected from among carbon black, precipitated amorphous silica, amorphous silica of natural origin, non-modified silicate fibres and mixtures thereof.

6. Composition as claimed in any one of the preceding claims wherein the standard reinforcement filler (c) is present in a quantity comprised between 1 phr and 120 phr, preferably between 20 phr and 90 phr.

7. Composition as claimed in any one of the preceding claims, wherein said modified fibres are obtainable according to the process of claim 1 in which:
- said first liquid medium is selected from among water, alcohols, ethers, ketones and mixtures thereof, preferably it is selected from among water, C1-C6 alcohols and mixtures thereof, more preferably it is ethanol or water or mixtures thereof and/or
- said compound precursor of amorphous silica is used in a quantity such to generate amorphous silica in weight ratio comprised between 1:1 and 1:20, more preferably between 1:2 and 1:10, with respect to the weight of the fibres; and/or
- said steps for hydrolyzing the compound precursor of amorphous silica and allowing the modification of the fibres are conducted at a temperature of at least 20°C, preferably at a temperature comprised between 40 and 80°C and for a time of at least 10 minutes, preferably for a time comprised between 10 minutes and 10 hours.

8. Composition as claimed in any one of the preceding claims, wherein said modified fibres are obtainable according to the process of claim 1 in which:
- said compound precursor of amorphous silica is a tetra-alkyl derivative of silicic acid (II) preferably selected from among tetra-methyl orthosilicate, tetra-ethyl orthosilicate, tetra n-propyl silicate and tetra-n-butyl silicate; and
- said base is present and is preferably selected from among ammonia, ammonium hydroxide, hydroxylamine, alkyl, aryl or aryl-alkyl primary, secondary or tertiary amines, sodium hydroxide, potassium hydroxide, more preferably it is ammonia or ammonium hydroxide.

9. Composition as claimed in one of the claims from 1 to 7, wherein said modified fibres are obtainable according to the process of claim 1 in which:
- said compound precursor of amorphous silica is an alkaline salt of silicic acid of formula (I) preferably selected from among sodium orthosilicate, sodium metasilicate and potassium orthosilicate; and
- said acid is present and is preferably selected from among hydrochloric acid, sulphuric acid, phosphoric acid and nitric acid.

10. Tyre component for vehicle wheels comprising a vulcanised elastomeric material obtainable via vulcanisation of the vulcanisable elastomeric composition as claimed in any one of the claims from 1 to 9.

11. The component as claimed in claim 10 selected from among the tread, carcass structure, belt structure, under-layer, anti-abrasive elongated element, sidewall, sidewall insert, mini-sidewall, under-liner, rubber layers, bead filler and sheets, preferably it is selected from among the tread, under-layer and sidewall insert.

12. Tyre for vehicle wheels comprising at least one tyre component as claimed in claim 10 or 11.

13. The tyre as claimed in claim 12 for high-performance vehicles.

14. The tyre as claimed in claim 12 or 13 comprising at least
- one carcass structure comprising at least one carcass layer having opposite lateral edges associated with respective bead structures;
- one belt structure applied in radially outer position with respect to the carcass structure,
- one tread band applied in radially outer position with respect to said belt structure, and possibly at least one under-layer and/or one anti-abrasive elongated element and/or one sidewall and/or one sidewall insert and/or one mini-sidewall and/or one under-liner and/or one rubber layer and/or one sheet,
wherein at least one from among said carcass structure and/or tread band and/or belt structure and/or under-layer and/or anti-abrasive elongated element and/or sidewall and/or sidewall insert and/or mini-sidewall and/or under-liner and/and/or rubber layer and/or bead structure and/or sheet comprises a vulcanised elastomeric material obtainable via vulcanisation of the vulcanisable elastomeric composition as claimed in any one of the claims from 1 to 9.

15. A process for preparing modified silicate fibres that comprises:
- providing silicate fibres with needle-shaped morphology of nanometric size having an aspect ratio of at least 2:1 and a diameter or maximum cross-sectional dimension of less than 500 nm,
- suspending said fibres in a first liquid medium,
- placing the suspension of the fibres in contact with a compound precursor of amorphous silica, possibly dissolved or suspended in a second liquid medium, wherein said compound precursor of amorphous silica is selected from:
I. the alkaline salts of silicic acid, of formula
M₂O. n SiO₂ (I)
where M = Na, K, Li and where n is comprised between 0.5 and 4, preferably n =0.5 or 1 or 3 and M=Na or K;
II. the tetra-alkyl derivatives of silicic acid (or tetra-alkoxy-silanes) of formula
(RO)₄Si (II)
wherein the R groups, equal to or different from each other, represent C1-C6 alkyls,
III. the halosilanes of formula
SiX₄ or (RO)₃SiX or (RO)₂SiX₂ or (RO)SiX₃ (III)
wherein the R groups, equal to or different from each other, represent C1-C6 alkyls, and X, equal to or different from each other, are selected from among chlorine, bromine and iodine, preferably chlorine;
- possibly providing water,
- possibly providing an acid or a base,
- hydrolyzing the compound precursor of amorphous silica and allowing the modification of the fibres, and
- separating the fibres thus modified from the final liquid medium.

## Patentansprüche

1. Vulkanisierbare Elastomerzusammensetzung für Komponenten von Reifen, umfassend mindestens:
a) 100 phr mindestens eines elastomeren Dienpolymers,
b) 1 bis 80 phr modifizierter Silikatfasern mit nadelförmiger Morphologie in Nanometergröße, wobei die Fasern ein Längen-Durchmesser-Verhältnis von mindestens 2:1 und einen Durchmesser oder eine maximale Querschnittsabmessung von weniger als 500 nm aufweisen, wobei die modifizierten Fasern mindestens teilweise mit auf der Oberfläche abgelagertem amorphem Siliciumdioxid beschichtet sind,
c) 0 bis 120 phr eines Standardverstärkungsfüllstoffs,
d) 0,1 bis 15 phr eines Vulkanisationsmittels und
e) 0,1 bis 20 phr eines Kupplungsmittels,
wobei die modifizierten Fasern nach einem Prozess erhältlich sind, der umfasst:
- Bereitstellen von Silikatfasern mit nadelförmiger Morphologie in Nanometergröße, die ein Längen-Durchmesser-Verhältnis von mindestens 2:1 und einen Durchmesser oder eine maximale Querschnittsabmessung von weniger als 500 nm aufweisen,
- Suspendieren der Fasern in einem ersten flüssigen Medium,
- Inkontaktbringen der Fasersuspension mit einem Verbindungsvorläufer aus amorphem Siliciumdioxid, gegebenenfalls in einem zweiten flüssigen Medium gelöst oder suspendiert, wobei der Verbindungsvorläufer aus amorphem Siliciumdioxid ausgewählt ist aus:
I. den alkalischen Salzen von Kieselsäure der Formel
M₂O. n SiO₂ (I)
wobei M = Na, K, Li und wobei n zwischen 0,5 und 4 liegt, bevorzugt n = 0,5 oder 1 oder 3 und M = Na oder K;
II. den Tetraalkylderivaten von Kieselsäure (oder Tetraalkoxysilanen) der Formel
(RO)₄Si (II)
wobei die R-Gruppen, die gleich sind oder sich voneinander unterscheiden, C1-C6-Alkyle darstellen,
III. den Halogensilanen der Formel
SiX₄ oder (RO)₃SiX oder (RO)₂SiX₂ oder (RO)SiX₃ (III)
wobei die R-Gruppen, die gleich sind oder sich voneinander unterscheiden, C1-C6-Alkyle darstellen und X, die gleich sind oder sich voneinander unterscheiden, aus Chlor, Brom und Iod, bevorzugt Chlor ausgewählt sind;
- gegebenenfalls Bereitstellen von Wasser,
- gegebenenfalls Bereitstellen einer Säure oder einer Base,
- Hydrolysieren des Verbindungsvorläufers aus amorphem Siliciumdioxid und Ermöglichen der Modifizierung der Fasern, und
- Trennen der so modifizierten Fasern vom letzten flüssigen Medium.

2. Zusammensetzung nach Anspruch 1, wobei die Fasern ein Längen-Durchmesser-Verhältnis von mindestens 3:1, bevorzugt von mindestens 5:1 aufweisen.

3. Zusammensetzung nach einem der vorstehenden Ansprüche, wobei die Fasern aus Sepiolith-Fasern, Palygorskit-Fasern, Halloysit-Fasern, Wollastonit-Fasern und Mischungen davon ausgewählt sind, bevorzugt aus Sepiolith-Fasern, Halloysit-Fasern und Mischungen davon.

4. Zusammensetzung nach einem der vorstehenden Ansprüche, wobei die modifizierten Fasern in einer Menge von 3 phr bis 50 phr, bevorzugt von 3 phr bis 25 phr vorhanden sind.

5. Zusammensetzung nach einem der vorstehenden Ansprüche, wobei ein Standardverstärkungsfüllstoff (c) vorhanden ist, ausgewählt aus Ruß, gefälltem amorphem Siliciumdioxid, amorphem Siliciumdioxid natürlichen Ursprungs, nicht modifizierten Silikatfasern und Mischungen davon.

6. Zusammensetzung nach einem der vorstehenden Ansprüche, wobei der Standardverstärkungsfüllstoff (c) in einer Menge zwischen 1 phr und 120 phr, bevorzugt zwischen 20 phr und 90 phr vorhanden ist.

7. Zusammensetzung nach einem der vorstehenden Ansprüche, wobei die modifizierten Fasern nach dem Prozess von Anspruch 1 erhältlich sind, bei dem:
- das erste flüssige Medium ausgewählt ist aus Wasser, Alkoholen, Ethern, Ketonen und Mischungen davon, bevorzugt ausgewählt ist aus Wasser, C1-C6-Alkoholen und Mischungen davon, bevorzugter Ethanol oder Wasser oder Mischungen davon ist und/oder
- der Verbindungsvorläufer aus amorphem Siliciumdioxid in einer solchen Menge verwendet wird, dass amorphes Siliciumdioxid in einem Gewichtsverhältnis zwischen 1:1 und 1:20, bevorzugter zwischen 1:2 und 1:10, bezogen auf das Gewicht der Fasern, erzeugt wird; und/oder
- die Schritte zum Hydrolysieren des Verbindungsvorläufers aus amorphem Siliciumdioxid und zum Ermöglichen der Modifizierung der Fasern bei einer Temperatur von mindestens 20 °C, bevorzugt bei einer Temperatur zwischen 40 und 80 °C und für eine Zeit von mindestens 10 Minuten, bevorzugt für eine Zeit zwischen 10 Minuten und 10 Stunden, durchgeführt werden.

8. Zusammensetzung nach einem der vorstehenden Ansprüche, wobei die modifizierten Fasern nach dem Prozess von Anspruch 1 erhältlich sind, bei dem:
- der Verbindungsvorläufer aus amorphem Siliciumdioxid ein Tetraalkylderivat von Kieselsäure (II) ist, das bevorzugt aus Tetramethylorthosilikat, Tetraethylorthosilikat, Tetra-n-propylsilikat und Tetra-n-butylsilikat ausgewählt ist; und
- die Base vorhanden ist und bevorzugt aus Ammoniak, Ammoniumhydroxid, Hydroxylamin, primären, sekundären oder tertiären Alkyl-, Aryl- oder Aryl-Alkyl-Aminen, Natriumhydroxid, Kaliumhydroxid, bevorzugter aus Ammoniak oder Ammoniumhydroxid ausgewählt ist.

9. Zusammensetzung nach einem der Ansprüche 1 bis 7, wobei die modifizierten Fasern nach dem Prozess von Anspruch 1 erhältlich sind, bei dem:
- der Verbindungsvorläufer aus amorphem Siliciumdioxid ein alkalisches Salz der Kieselsäure der Formel (I) ist, das bevorzugt aus Natriumorthosilikat, Natriummetasilikat und Kaliumorthosilikat ausgewählt ist; und
- die Säure vorhanden ist und bevorzugt aus Salzsäure, Schwefelsäure, Phosphorsäure und Salpetersäure ausgewählt ist.

10. Reifenkomponente für Fahrzeugräder, umfassend ein vulkanisiertes Elastomermaterial, das durch Vulkanisation der vulkanisierbaren Elastomerzusammensetzung nach einem der Ansprüche 1 bis 9 erhältlich ist.

11. Komponente nach Anspruch 10, die aus der Lauffläche, der Karkassenstruktur, der Gürtelstruktur, der Unterschicht, dem abriebfesten länglichen Element, der Seitenwand, der Seitenwandeinlage, der Mini-Seitenwand, der Unterlage, den Gummischichten, dem Wulstfüller und den Platten ausgewählt ist, bevorzugt aus der Lauffläche, der Unterschicht und der Seitenwandeinlage ausgewählt ist.

12. Reifen für Fahrzeugräder, der mindestens eine Reifenkomponente nach Anspruch 10 oder 11 umfasst.

13. Reifen nach Anspruch 12 für Hochleistungsfahrzeuge.

14. Reifen nach Anspruch 12 oder 13, umfassend mindestens
- eine Karkassenstruktur, umfassend mindestens eine Karkassenschicht, die gegenüberliegende Seitenränder aufweist, die jeweiligen Wulststrukturen zugeordnet sind;
- eine Gürtelstruktur, die in radial äußerer Position in Bezug auf die Karkassenstruktur aufgebracht ist,
- ein Laufflächenband, das in radial äußerer Position in Bezug auf die Gürtelstruktur aufgebracht ist, und gegebenenfalls mindestens eine Unterschicht und/oder ein abriebfestes längliches Element und/oder eine Seitenwand und/oder eine Seitenwandeinlage und/oder eine Mini-Seitenwand und/oder eine Unterlage und/oder eine Gummischicht und/oder eine Platte,
wobei mindestens eines von der Karkassenstruktur und/oder dem Laufflächenband und/oder der Gürtelstruktur und/oder der Unterschicht und/oder dem abriebfesten länglichen Element und/oder der Seitenwand und/oder der Seitenwandeinlage und/oder der Mini-Seitenwand und/oder der Unterlage und/oder der Gummischicht und/oder der Wulststruktur und/oder der Platte ein vulkanisiertes Elastomermaterial umfasst, das durch Vulkanisation der vulkanisierbaren Elastomerzusammensetzung nach einem der Ansprüche 1 bis 9 erhältlich ist.

15. Prozess zur Herstellung modifizierter Silikatfasern, der umfasst:
- Bereitstellen von Silikatfasern mit nadelförmiger Morphologie in Nanometergröße, die ein Längen-Durchmesser-Verhältnis von mindestens 2:1 und einen Durchmesser oder eine maximale Querschnittsabmessung von weniger als 500 nm aufweisen,
- Suspendieren der Fasern in einem ersten flüssigen Medium,
- Inkontaktbringen der Fasersuspension mit einem Verbindungsvorläufer aus amorphem Siliciumdioxid, gegebenenfalls in einem zweiten flüssigen Medium gelöst oder suspendiert, wobei der Verbindungsvorläufer aus amorphem Siliciumdioxid ausgewählt ist aus:
I. den alkalischen Salzen von Kieselsäure der Formel
M₂O. n SiO₂ (I)
wobei M = Na, K, Li und wobei n zwischen 0,5 und 4 liegt, bevorzugt n = 0,5 oder 1 oder 3 und M = Na oder K;
II. den Tetraalkylderivaten von Kieselsäure (oder Tetraalkoxysilanen) der Formel
(RO)₄Si (II)
wobei die R-Gruppen, die gleich sind oder sich voneinander unterscheiden, C1-C6-Alkyle darstellen,
III. den Halogensilanen der Formel
SiX₄ oder (RO)₃SiX oder (RO)₂SiX₂ oder (RO)SiX₃ (III)
wobei die R-Gruppen, die gleich sind oder sich voneinander unterscheiden, C1-C6-Alkyle darstellen und X, die gleich sind oder sich voneinander unterscheiden, aus Chlor, Brom und Iod, bevorzugt Chlor ausgewählt sind;
- gegebenenfalls Bereitstellen von Wasser,
- gegebenenfalls Bereitstellen einer Säure oder einer Base,
- Hydrolysieren des Verbindungsvorläufers aus amorphem Siliciumdioxid und Ermöglichen der Modifizierung der Fasern, und
- Trennen der so modifizierten Fasern vom letzten flüssigen Medium.

## Revendications

1. Composition élastomère vulcanisable pour composants de pneus comprenant au moins :
a) 100 phr d'au moins un polymère élastomère diénique,
b) de 1 à 80 phr de fibres de silicate modifiées présentant une morphologie en forme d'aiguille de taille nanométrique, dans laquelle lesdites fibres présentent un rapport d'aspect d'au moins 2:1 et un diamètre ou une dimension transversale maximale inférieure à 500 nm, lesdites fibres modifiées étant au moins partiellement revêtues de silice amorphe déposée sur la surface,
c) de 0 à 120 phr d'une charge de renforcement standard,
d) de 0,1 à 15 phr d'un agent de vulcanisation, et
e) de 0,1 à 20 phr d'un agent de couplage,
dans laquelle lesdites fibres modifiées peuvent être obtenues selon un procédé qui comprend :
- la fourniture de fibres de silicate présentant une morphologie en forme d'aiguille de taille nanométrique présentant un rapport d'aspect d'au moins 2:1 et un diamètre ou une dimension transversale maximale inférieure à 500 nm,
- la mise en suspension desdites fibres dans un premier milieu liquide,
- la mise en contact de la suspension des fibres avec un composé précurseur de silice amorphe, éventuellement dissous ou en suspension dans un second milieu liquide, dans laquelle ledit composé précurseur de silice amorphe est choisi parmi :
I. les sels alcalins de l'acide silicique, de formule
M₂O. n SiO₂ (I)
où M = Na, K, Li et où n est compris entre 0,5 et 4, de préférence n = 0,5 ou 1 ou 3 et M = Na ou K ;
II. les dérivés tétra-alkylés de l'acide silicique (ou tétra-alcoxy-silanes) de formule
(RO)₄Si (II)
dans laquelle les groupes R, égaux ou différents les uns des autres, représentent des alkyles en C1-C6,
III. les halogénosilanes de formule
SiX₄ ou (RO)₃SiX ou (RO)₂SiX₂ ou (RO)SiX₃ (III)
dans laquelle les groupes R, égaux ou différents les uns des autres, représentent des alkyles en C1-C6, et X, égaux ou différents les uns des autres, sont choisis parmi le chlore, le brome et l'iode, de préférence le chlore ;
- la fourniture éventuelle d'eau,
- la fourniture éventuelle d'un acide ou d'une base,
- l'hydrolyse du composé précurseur de silice amorphe et la modification des fibres, et
- la séparation des fibres ainsi modifiées du milieu liquide final.

2. Composition selon la revendication 1, dans laquelle lesdites fibres présentent un rapport d'aspect d'au moins 3:1, de préférence d'au moins 5:1.

3. Composition selon l'une quelconque des revendications précédentes dans laquelle lesdites fibres sont choisies parmi les fibres de sépiolite, les fibres de palygorskite, les fibres d'halloysite, les fibres de wollastonite et des mélanges de ceux-ci, de préférence parmi les fibres de sépiolite, d'halloysite et des mélanges de ceux-ci.

4. Composition selon l'une quelconque des revendications précédentes, dans laquelle lesdites fibres modifiées sont présentes en une quantité de 3 phr à 50 phr, de préférence de 3 phr à 25 phr.

5. Composition selon l'une quelconque des revendications précédentes dans laquelle une charge de renforcement standard (c) est présente, choisie parmi le noir de carbone, la silice amorphe précipitée, la silice amorphe d'origine naturelle, les fibres de silicate non modifiées et des mélanges de ceux-ci.

6. Composition selon l'une quelconque des revendications précédentes dans laquelle la charge de renforcement standard (c) est présente en une quantité comprise entre 1 phr et 120 phr, de préférence entre 20 phr et 90 phr.

7. Composition selon l'une quelconque des revendications précédentes, dans laquelle lesdites fibres modifiées peuvent être obtenues selon le processus de la revendication 1 dans lequel :
- ledit premier milieu liquide est choisi parmi l'eau, les alcools, les éthers, les cétones et des mélanges de ceux-ci, il est choisi de préférence parmi l'eau, les alcools en C1-C6 et des mélanges de ceux-ci, plus préférentiellement il s'agit de l'éthanol ou de l'eau ou des mélanges de ceux-ci et/ou
- ledit composé précurseur de silice amorphe est utilisé en une quantité telle qu'il génère de la silice amorphe dans un rapport pondéral compris entre 1:1 et 1:20, plus préférentiellement entre 1:2 et 1:10, par rapport au poids des fibres ; et/ou
- lesdites étapes d'hydrolyse du composé précurseur de silice amorphe et de modification des fibres sont réalisées à une température d'au moins 20 °C, de préférence à une température comprise entre 40 et 80 °C et pendant une durée d'au moins 10 minutes, de préférence pendant une durée comprise entre 10 minutes et 10 heures.

8. Composition selon l'une quelconque des revendications précédentes, dans laquelle lesdites fibres modifiées peuvent être obtenues selon le processus de la revendication 1 dans lequel :
- ledit composé précurseur de silice amorphe est un dérivé tétraalkyle de l'acide silicique (II) choisi de préférence parmi l'orthosilicate de tétraméthyle, l'orthosilicate de tétraéthyle, le silicate de tétra-n-propyle et le silicate de tétra-n-butyle ; et
- ladite base est présente et est de préférence choisie parmi l'ammoniac, l'hydroxyde d'ammonium, l'hydroxylamine, les amines primaires, secondaires ou tertiaires d'alkyle, d'aryle ou d'arylalkyle, l'hydroxyde de sodium, l'hydroxyde de potassium, plus préférentiellement il s'agit de l'ammoniac ou de l'hydroxyde d'ammonium.

9. Composition selon l'une des revendications 1 à 7, dans laquelle lesdites fibres modifiées peuvent être obtenues selon le processus de la revendication 1 dans lequel :
- ledit composé précurseur de silice amorphe est un sel alcalin d'acide silicique de formule (I) choisi de préférence parmi l'orthosilicate de sodium, le métasilicate de sodium et l'orthosilicate de potassium ; et
- ledit acide est présent et est de préférence choisi parmi l'acide chlorhydrique, l'acide sulfurique, l'acide phosphorique et l'acide nitrique.

10. Composant de pneu pour roues de véhicule comprenant un matériau élastomère vulcanisé pouvant être obtenu par vulcanisation de la composition élastomère vulcanisable selon l'une quelconque des revendications 1 à 9.

11. Composant selon la revendication 10 choisi parmi la bande de roulement, la structure de carcasse, la structure de ceinture, la sous-couche, l'élément allongé anti-abrasif, la paroi latérale, l'insert de paroi latérale, la mini paroi latérale, la doublure, les couches de caoutchouc, le remplissage de talon et les feuilles, il est de préférence choisi parmi la bande de roulement, la sous-couche et l'insert de paroi latérale.

12. Pneu pour roues de véhicule comprenant au moins un composant de pneu selon la revendication 10 ou 11.

13. Pneu selon la revendication 12 pour véhicules à haute performance.

14. Pneu selon la revendication 12 ou 13 comprenant au moins
- une structure de carcasse comprenant au moins une couche de carcasse présentant des bords latéraux opposés associés à des structures de talon respectives ;
- une structure de ceinture disposée en position radialement extérieure par rapport à la structure de carcasse,
- une bande de roulement disposée en position radialement extérieure par rapport à ladite structure de ceinture, et éventuellement au moins une sous-couche et/ou un élément allongé anti-abrasif et/ou une paroi latérale et/ou un insert de paroi latérale et/ou une mini paroi latérale et/ou une doublure et/ou une couche de caoutchouc et/ou une feuille,
dans lequel au moins l'un(e) parmi ladite/ledit structure de carcasse et/ou bande de roulement et/ou structure de ceinture et/ou sous-couche et/ou élément allongé anti-abrasif et/ou paroi latérale et/ou insert de paroi latérale et/ou mini-paroi latérale et/ou doublure et/ou couche de caoutchouc et/ou structure de talon et/ou feuille comprend un matériau élastomère vulcanisé pouvant être obtenu par vulcanisation de la composition élastomère vulcanisable selon l'une quelconque des revendications 1 à 9.

15. Processus de préparation de fibres de silicate modifiées qui comprend :
- la fourniture de fibres de silicate présentant une morphologie en forme d'aiguille de taille nanométrique présentant un rapport d'aspect d'au moins 2:1 et un diamètre ou une dimension transversale maximale inférieure à 500 nm,
- la mise en suspension desdites fibres dans un premier milieu liquide,
- la mise en contact de la suspension des fibres avec un composé précurseur de silice amorphe, éventuellement dissous ou en suspension dans un second milieu liquide, dans lequel ledit composé précurseur de silice amorphe est choisi parmi :
I. les sels alcalins de l'acide silicique, de formule
M₂O. n SiO₂ (I)
où M = Na, K, Li et où n est compris entre 0,5 et 4, de préférence n = 0,5 ou 1 ou 3 et M = Na ou K ;
II. les dérivés tétra-alkylés de l'acide silicique (ou tétra-alcoxy-silanes) de formule
(RO)₄Si (II)
dans lequel les groupes R, égaux ou différents les uns des autres, représentent des alkyles en C1-C6,
III. les halogénosilanes de formule
SiX₄ ou (RO)₃SiX ou (RO)₂SiX₂ ou (RO)SiX₃ (III)
dans lequel les groupes R, égaux ou différents les uns des autres, représentent des alkyles en C1-C6, et X, égaux ou différents les uns des autres, sont choisis parmi le chlore, le brome et l'iode, de préférence le chlore ;
- la fourniture éventuelle d'eau,
- la fourniture éventuelle d'un acide ou d'une base,
- l'hydrolyse du composé précurseur de silice amorphe et la modification des fibres, et
- la séparation des fibres ainsi modifiées du milieu liquide final.
